Europäisches Patentamt

European Patent Office

Office européen des brevets

(19)

(11) Veröffentlichungsnummer: **0 388 628**
**A2**

(12) **EUROPÄISCHE PATENTANMELDUNG**

(21) Anmeldenummer: **90102680.7**

(22) Anmeldetag: **12.02.90**

(51) Int. Cl.5: **C12C 9/06**

(30) Priorität: **18.03.89 DE 3908922**

(43) Veröffentlichungstag der Anmeldung:
**26.09.90 Patentblatt 90/39**

(84) Benannte Vertragsstaaten:
**AT BE CH DK ES FR GB IT LI NL**

(71) Anmelder: **OTTO TUCHENHAGEN GmbH & Co. KG**
**Am Industriepark 2-10**
**D-2059 Büchen(DE)**

(72) Erfinder: **Mieth, Hans Otto, Dipl.-Ing.**
**Sandkrug 3**
**D-2058 Schnakenbek(DE)**
Erfinder: **Riess, Siegfried, Dipl.-Ing.**
**Am Dorfsee 15**
**D-2059 Güster(DE)**

(54) **Verfahren zur Abscheidung von Partikeln aus vergärbaren oder vergorenen Suspensionen der Getränkeherstellung.**

(57) Die Erfindung betrifft ein Verfahren zur Abscheidung von Partikeln aus vergärbaren oder vergorenen Suspensionen der Getränkeherstellung unter Anwendung der Tangentialflußfiltration (Cross-Flow-Filtration) und unter Verwendung von Membranen der Ultra- oder Mikrofiltration.

Durch das vorgeschlagenen Verfahren wird insbesondere die Abscheidung von Kühltrubpartikeln aus Bierwürze gegenüber Verfahren nach dem Stand der Technik qualitativ und quantitativ verbessert.

Dies wird unter anderem dadurch erreicht, daß ein Volumenstrom Q der Suspension, aus der Partikeln bis auf einen gewünschten Partikelgehalt entfernt werden sollen, in an sich bekannter Weise in zwei Volumenströme $Q_1$ und $Q_2$ aufgeteilt wird, daß, in Fließrichtung gesehen, Membranen mit abnehmender Trenngrenze vorgesehen sind, daß Permeatströme $Q_{11}^*$, $Q_{12}^*$ bis $Q_{1n}^*$ mit Partikeln unterschiedlicher mittlerer Größe voneinander getrennt erfaßt und daß Permeatströme davon ausgewählt und mit dem Volumenstrom $Q_2$ vereinigt werden.

Fig.3

## Verfahren zur Abscheidung von Partikeln aus vergärbaren oder vergorenen Suspensionen der Getränkeherstellung

Die Erfindung betrifft ein Verfahren zur Abscheidung von Partikeln aus vergärbaren oder vergorenen Suspensionen der Getränkeherstellung nach dem Oberbegriff des Anspruchs 1.

Grundlage des Trennverfahrens der einleitend gekennzeichneten Gattung bildet die sogenannte Tangentialflußfiltration, auch Cross-Flow-Filtration genannt, die sich von der klassischen Filtration insofern unterscheidet, als die Oberfläche der Filtermembran quer zur Filtrationsrichtung überströmt wird. Die zu filtrierende Suspension und die in ihr enthaltenen Partikeln, die Trubstoffe, werden mit ausreichender Geschwindigkeit über die feinporige Membranoberfläche geleitet. Dabei entstehende Turbulenzen sind dafür verantwortlich, daß sich an der Membranoberfläche nur eine minimale Deckschicht aufbaut. Die von der Membran zurückgehaltenen Partikeln werden mit dem sogenannten Retentatstrom entfernt. Die das Filter verlassende geklärte, die Membran durchsetzende Flüssigkeit wird Permeat genannt. Die Tangentialflußfiltration differenziert man, je nach Porösität bzw. Abscheiderate oder Porengröße bzw. Trenngrenze der verwendeten Membran in Ultrafiltration und in Mikrofiltration.

Ein Verfahren der einleitend gekennzeichneten Gattung, bei dem Unfiltrat mit Filtrat geregelt verschnitten wird, ist u.a. aus der DE-OS-25 53 416 bekannt. Dort wird eine Anlage vorgeschlagen, bei der eine zusätzliche Leitung vorgesehen ist, die die Eingangsleitung für die zu behandelnde Lösung mit der Ausgangsleitung der aufbereiteten Lösung verbindet. Durch diese Maßnahme besteht die Möglichkeit, eine bestimmte Lösungskonzentration durch Verschnitt der aus der Abscheidevorrichtung über die Ausgangsleitung austretenden Lösung mit der aufzubereitenden Lösung einzustellen. Die Teilstrommenge an behandelter Lösung in der Ausgangsleitung und unbehandelter Lösung in der zusätzlichen Leitung kann manuell oder je nach Zusammensetzung des gewünschten Gemisches produktabhängig geregelt werden. Eine fraktionierte Auftrennung eines Stoffgemisches mittels Querstromfiltration ist durch das bekannte Verfahren und die Anlage zu seiner Durchführung nicht möglich.

Ein Verfahren zur fraktionierten Auftrennung von Stoffgemischen zum Zwecke der Reinigung, Konzentrierung und Gewinnung spezifischer Substanzen, bei dem Membranen in mehrstufiger Modulanordnung eingesetzt werden, ist aus der DE 32 45 591 A1 bekannt. Dieses bekannte Verfahren sieht zur Erhöhung der Selektivität bei der fraktionierten Auftrennung vor, daß mit mindestens zehnfacher, vorzugsweise zwanzigfacher Verdünnung gearbeitet wird und daß die Filtrationsraten auf mindestens 70 % eingestellt werden. Wegen der notwendigen Verdünnung des Unfiltrats ist das bekannte Verfahren zur Abscheidung von Partikeln aus vergärbaren oder vergorenen Suspensionen der Getränkeherstellung nicht geeignet.

In der Zeitschrift "Weinwirtschaft-Technik" , Nr. 12, Dez. 1987, Seiten 11 bis 18, wird über Versuche berichtet, bei denen Jungweine mit Hilfe der Tangentialflußfiltration geklärt wurden. Diese und auch andere neuere Veröffentlichungen belegen die grundsätzliche Eignung bestimmter Tangentialflußfiltrationssysteme zur Klärung von Wein.

Im Bereich der Getränkeherstellung, insbesondere der Bierherstellung, werden Substrate eingesetzt, die eine Partikelsuspension darstellen, aus der die Partikeln überwiegend oder bis auf einen gewünschten Partikelgehalt entfernt werden müssen. Insbesondere in der umfangreichen Literatur der Technologie des Bierbrauens nehmen Verfahren zur Trennung einer Partikelsuspension einen breiten Raum ein. Den umfassendsten Überblick über den Stand der Technik auf dem Gebiet der vorstehend genannten Trennverfahren gibt sicherlich die Literatur zur Trubabtrennung aus Bierwürze. In diesem Zusammenhang sei auf die einschlägige Literatur verwiesen, insbesondere beispielsweise auf das Hand- und Lehrbuch "Die Technologie der Würzebereitung" , L. Narziss, 6. Auflage 1985 oder auf einen neueren Artikel, der das vorstehende Problem in Form eines zusammenfassenden Überblickes zu dem Thema "Die Trubabtrennung im Whirlpool und im Flotationstank" behandelt (vgl. Zeitschrift "Brauindustrie" , Jahrg. 1986, Seiten 777 bis 781).

Bei der Analyse des vorgenannten Standes der Technik zur Trubabtrennung aus Bierwürze fällt auf, daß die im einleitend gekennzeichneten Verfahren genannte Tangentialflußfiltration nicht zur Anwendung gelangt bzw. daß bislang nicht vorgeschlagen wurde, die Tangentialflußfiltration oder die Cross-Flow-Filtration auf die Trubabtrennung, insbesondere die Kalttrubabtrennung aus Bierwürze, anzuwenden.

Damit die der vorliegenden Erfindung zugrunde liegende Aufgabe hinsichtlich ihrer Bedeutung und ihrer Auswirkungen auf die Brautechnologie angemessen zu würdigen und zu bewerten ist, sollen im nachfolgenden die derzeit relevanten Verfahren zur Trubabtrennung aus Bierwürze kurz dargestellt werden:

Die Würzebehandlung unterscheidet zunächst zwischen Heißtrub- und Kühltrubabtrennung. Der Heißtrub oder auch Kochtrub genannt wird durch die Hitzekoagulation von hochmolekularen Stickstoffsubstanzen gebildet. Beschaffenheit und Menge des Heißtrubes können in weiten Grenzen schwanken. Er hat eine Teilchengröße von 30 bis 80 $\mu$m. Unter Kühltrub werden jene Ausscheidungen verstanden, die sich beim Abkühlen einer heißen Würze bilden, und zwar bei Temperaturen unter 70° bis 55° Celsius, also von deren "Kühltrübungspunkt" an bis hin zur Anstelltemperatur. Der Kühltrub hat eine Teilchengröße von ca. 50 $\mu$m (ca. 60° Celsius) bis 1$\mu$m und darunter (bei Anstelltemperatur).

Bei der Heißtrubabtrennung benutzt man einerseits den Einfluß der Schwerkraft, andererseits aber auch, im Hinblick auf eine Verstärkung der notwendigen Trennkräfte, Zentrifugalkräfte. Sedimentation, das heißt Schwerkraftabscheidung, wird in sogenannten Kühlschiffen durchgeführt, deren Fläche, je nach Chargengröße, zwischen 30 m² und 150 m² liegt. Die heiße Würze hat eine Schichthöhe von 25 cm. Unter dem Einfluß der Schwerkraft sinken die Heißtrubpartikeln zu Boden. Der klare Überstand wird abgezogen und sofort gekühlt. Das verbleibende TrubWürze-Gemisch wird mit Kieselgur versetzt, filtriert oder zentrifugiert, sterilisiert und ebenfalls gekühlt.

Die Vorteile dieses Apparates liegen in der Energieeinsparung. Einerseits spart die Nachverdampfung auf dem Kühlschiff Kochzeit, andererseits sinkt dadurch die Würzetemperatur, und es vermindert sich der Aufwand an Kühlenergie. Die Nachteile dieses Systems sind der große Grundflächenbedarf, der hohe manuelle Arbeitsaufwand beim Entleeren und Reinigen und die entfallende Rekooperationsmöglichkeit der Nachverdampfungswärme. Während des Sedimentationsprozesses besteht eine Infektionsgefahr durch die umgebende Luft.

Im Setzbottich, der ebenfalls als Schwerkraftabscheider arbeitet, erreicht man Würzehöhen zwischen 1 m und 4 m. Nach einer sogenannten Rast (Verweilzeit) von 40 bis 60 Minuten wird der einen Schwimmer die blanke Würze von der Oberfläche her abgezogen. Die Verarbeitung der Trubwürze erfolgt analog zum Kühlschiff.

Als einziger Zentrifugalabscheider wird in der Brauerei die Zentrifuge eingesetzt. Die heiße Würze wird in einen Puffertank gepumpt, anschließend zentrifugiert und gekühlt. Das Verfahren ist automatisierbar. Diesem Vorteil stehen die hohen Investitions- und Betriebskosten gegenüber.

Die Heißwürzefiltration liefert bei Zudosierung von Kieselgur oder Perlite die sicherste Heißtrubabtrennung. Zur Anwendung gelangen sogenannte Oberflächenfilter, bei denen die Partikelabscheidung an einer Oberfläche, die quer zur Strömungsrichtung liegt, erfolgt. Dabei werden die Partikeln weniger durch das Filter selbst als vielmehr durch den sich allmählich auf den Filter abscheidenden Filterkuren zurückgehalten. Damit es überhaupt zur Bildung dieses Kuchens kommt, müssen die Öffnungen des Filters zwar so eng sein, daß sie die gröbsten Partikeln der betreffenden Suspension zurückhalten; jedoch ist, außer im ersten Augenblick, die Abscheidung durch die Porenweite des allmählich mehr und mehr anwachsenden Kuchens bestimmt. Der Vorgang selber erzeugt also ein Sieb, das seine Maschenweite der zu verarbeitenden Suspension weitgehend anpaßt. Das Filter muß nach jeder Charge gereinigt und das Filterhilfsmittel entsorgt werden. Eine Automation des Filtrationsvorganges und der Reinigung ist möglich.

Im Zusammenhang mit der Heißtrubabtrennung wird noch auf die Behandlung der Würze im sogenannten Whirlpool hingewiesen, der ein einfacher zylindrischer Behälter ohne Einbauten und Verschleißteile und darüber hinaus unkompliziert und leicht zu handhaben ist. Im Whirlpool wird durch tangentiale Einleitung der heißen Würze eine instationäre Drehströmung erzeugt, die sich nach dem Ende des Einlaufvorganges und dem Abklingen aller damit verbundenen Störungen stabilisiert, und die aufgrund von Reibungseffekten an der Zylinderwand und am Boden abge bremst wird. Infolge der Primärströmung und der daraus resultierenden Sekundärströmung werden im Laufe des Abklingvorganges der Strömung alle Heißtrubpartikeln, deren Sinkgeschwindigkeit nun größer ist als die Aufwärtsgeschwindigkeit der Würze, in den Bodenbereich des Whirlpools überführt, zur Behältermitte transportiert und dort am sich ausbildenden Trubkegel abgelagert (Teetasseneffekt). Mit sinkender Rotationsströmung verringert sich die Geschwindigkeit der Aufwärtsströmung der Würze, und es können immer kleinere Teilchen abgeschieden werden.

Die Abtrennung des Kühltrubes ist verfahrenstechnisch schwieriger und aufwendiger als die Abtrennung des Heißtrubes, da die Partikeln sehr klein sind und fast keinen Dichteunterschied zur flüssigen Phase aufweisen. Für die Kühltrubentfernung aus der gekühlten Bierwürze kommen die vorstehend beschriebenen Verfahren der Sedimentation, Zentrifugierung und Filtration in Frage. Wegen ihrer Feinheit und des geringen Dichteunterschiedes zur Bierwürze beanspruchen die Trubpartikeln bei der Sedimentation eine unwirtschaftlich lange Zeit. Die Infektionsgefahr der Bierwürze wird dadurch erhöht. Die Trennung durch Filtration wird wegen der verschmierenden Konsistenz des Trubs erschwert, auch wenn man Filtrationshilfsmittel benutzt. Die niedrige mechanische Stabilität der Partikeln ist Grund dafür, warum diese während des Zentrifugierens zerstört werden können.

Die Nachteile der vorstehend beschriebenen Verfahren erklären die Tatsache, warum die Flotation für derartige Probleme eine sinnvolle Lösung bei der Kühltrubabscheidung aus Würze darstellt. Da die Würze ohnehin belüftet werden muß, lag es nahe, dieses Verfahren für die Kühltrubabtrennung zu verwenden. Der Würze werden im Überschuß feinstverteilte Luftblasen zugemischt. Diese lösen sich langsam aus der Würze, fangen auf dem Weg nach oben die Trubpartikeln ein und transportieren sie im Laufe von zwei bis drei Stunden an die Würzeoberfläche und bilden dort eine hohe, kompakte Schaumdecke, die die Kühltrubpartikeln festhält.

Die Grenze zwischen Heiß- und Kühltrub läßt sich bislang weder im technologischen Ablauf noch in der Analytik exakt bestimmen; es liegt eine Überlappung der Bereiche vor. Jedenfalls wirkt sich ein restlicher Heißtrubanteil nachteilig auf die Kalttrubabscheidung durch Flotation aus.

Ausgehend vom vorstehend aufgezeigten Stand der Technik liegt der Erfindung die Aufgabe zugrunde, die Abscheidung von Partikeln aus vergärbaren oder vergorenen Suspensionen der Getränkeherstellung, insbesondere die Abscheidung von Kühltrubpartikeln aus Bierwürze, gegenüber Verfahren nach dem Stand der Technik, qualitativ und quantitativ zu verbessern.
Diese Aufgabe wird durch die Kennzeichenmerkmale des Anspruchs 1 gelöst. Eine vorteilhafte Weiterbildung des erfindungsgemäßen Verfahrens ist Gegenstand des Unteranspruchs 2. Anspruch 3 sieht vor, das Verfahren für die Abtrennung von Kühltrub aus Bierwürze zu verwenden.

Die Vorteile des vorgeschlagenen Verfahrens liegen insbesondere darin, daß bei Anwendung der Tangentialflußfiltration, insbesondere auf die Abscheidung von Kühltrubpartikeln aus Bierwürze und unter Verwendung von Membranen mit definierter Porengröße bzw. Trenngrenze die Abscheideleistung sowohl quantitativ als auch qualitativ gegenüber Verfahren nach dem Stand der Technik verbessert wird. Unter quantitativer Verbesserung ist die mengenmäßige Abscheidung des Kühltrubs aus der Bierwürze zu verstehen, während die qualitative Verbesserung die gezielte bzw. selektive Abtrennung bestimmter Partikelgrößen betrifft.

Die quantitative Einstellung eines bestimmten Kühltrubgehaltes in der Bierwürze kann durch Anwendung eines an sich bekannten Verfahren dadurch erreicht werden, daß ein Volumenstrom $Q$ der Suspension in zwei Volumenströme $Q_1$ und $Q_2$ aufgeteilt wird, daß ein mit Partikeln angereicherter Retentatstrom $\Delta Q_1$ aus dem Volumenstrom $Q_1$ abgeschieden wird, daß ein um den Volumenstrom $\Delta Q_1$ reduzierter Permeatstrom $Q_1^* = Q_1 - \Delta Q_1$ mit dem Volumenstrom $Q_2$ vereinigt wird, und daß das Volumenstromverhältnis $Q_1/Q_2$ in Abhängigkeit vom gewünschten Partikelgehalt regelbar ist.

Eine selektive Abtrennung von Partikeln, verbunden mit der Möglichkeit, die Partikelgrößenverteilung gezielt zu beeinflussen, stellt nun das erfindungsgemäße Verfahren sicher. Dies gelingt durch die Verwendung von Membranen mit unterschiedlicher Trenngrenze, wobei letztere, in Fließrichtung gesehen, abnimmt und darüber hinaus dadurch, daß Permeatströme mit Kühltrubpartikeln unterschiedlicher mittlerer Größe voneinander getrennt erfaßt, daß Permeatströme davon ausgewählt und mit dem Volumenstrom $Q_2$ vereinigt werden.

Eine gezielte bzw. selektive Beeinflussung der Partikelgrößenverteilung im Permeat ist auch dadurch gegeben, daß nach einer anderen Ausgestaltung des Verfahrens gemäß der Erfindung die Permeatströme und/oder der Retentatstrom in unterschiedlichem Umfang an der Vereinigung mit dem Volumenstrom $Q_2$ beteiligt sind bzw. ist.

Die vollständige oder teilweise Verwendung des Retentatstromes $\Delta Q_1$ in Verbindung mit ausgewählten Permeatströmen erlaubt es, bestimmte erwünschte Partikeln bzw. Partikelgrößen in der zur Gärung anstehenden Bierwürze zu belassen bzw. im Anschluß an die fraktionierte Abtrennung wieder vollständig oder teilweise in diese zu überführen. Durch selektive Abtrennung einerseits und gezielte "Komposition" ganz bestimmter, über die Partikelgröße erfaßbarer Trubstoffe andererseits sind bestimmte Eigenschaften des Bieres erreichbar bzw. zu sichern (z.B. rasche Vergärung, Verkürzung der Reifungsphase des Bieres, Verlänge- rung der Standzeit der Bierfilter, Verbesserung der Kälte- und der Schaumstabilität und verbessertes Schaumbildungsvermögen).

Der Stand der Technik hinsichtlich der Tangentialflußfiltration und das erfindungsgemäße Verfahren werden an Hand einfacher Beispiele nachfolgend erläutert. Es zeigen

Fig. 1 in schematischer Darstellung die an sich bekannte Tangentialflußfiltration in ihrer Anwendung auf einen Bierwürze-Volumenstrom $Q$;

Fig. 2 eine weitere bekannte Verfahrensvariante in ihrer Anwendung auf einen Bierwürze-Volumenstrom $Q$, bei dem Unfiltrat $Q_2$ mit Filtrat $Q_1^*$ geregelt verschnitten wird und

Fig. 3 das erfindungsgemäße Verfahren in seiner Anwendung auf einen Bierwürze-Volumenstrom $Q$ mit dem Ziel, die gewünschte Partikelgrößenverteilung gezielt bzw. selektiv zu verändern.

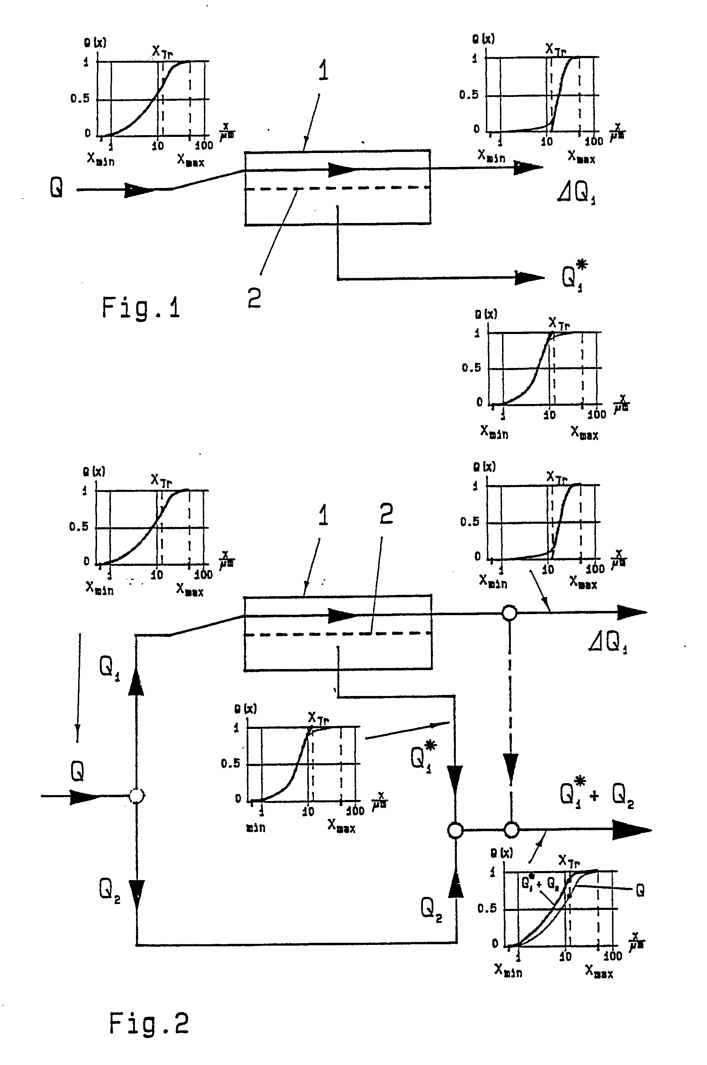

Eine Vorrichtung zur Tangentialflußfiltration 1 (Figur 1) wird von einem Volumenstrom $Q$ der Bierwürze beaufschlagt. Im Inneren dieser Vorrichtung befinden sich Membranen 2, die tangential zu ihrer Membranoberfläche angeströmt werden. Sie besitzen eine definierte Porengröße bzw. Trenngrenze $x_{Tr}$. Die über dem Volumenstrom $Q$ dargestellte Verteilungssummenkurve $Q(x)$ zeigt in qualitativer Darstellung die Partikelgröße $x$ (auf der Abszisse aufgetragen) in Abhängigkeit von der Verteilungssumme Q (auf der Ordinate aufgetragen). Die Größe x bedeutet dabei den Durchmesser der meist als kugelförmig angenommenen Partikeln. Jeder Punkt auf der Kurve stellt eine dimensionslose Verhältniszahl Q(x) dar, die den Mengenanteil zwischen der kleinsten Partikelgröße $x_{min}$ und einer bestimmten Partikelgröße x zeigt. Die Verteilungssummenkurve beginnt mit $x_{min}$ auf der Abszisse, wo Q den Wert O hat. Sie endet mit der größten Partikelgröße $x_{max}$, und die Verteilungssumme hat hier den Wert 1 bzw. 100 %.

Abhängig von der für die Membranen gewählte Trenngrenze $x_{Tr}$ werden von diesen alle Partikeln mit einer Partikelgröße $\geq x_{Tr}$ zurückgehalten. Der sogenannte Retentatstrom $\Delta Q_1$ reichert sich folglich mit Partikeln an, deren Abmessungen $< x_{Tr}$ sind. Die Darstellung geht vereinfachend davon aus, daß das Retentat, wenn es die Vorrichtung zur Tangentialflußfiltration verläßt, keine Partikeln mit einer Größe unterhalb $x_{Tr}$ mehr enthält. Dementsprechend finden sich im Permeatstrom $Q_1^*$, ebenfalls vereinfacht betrachtet, alle Partikeln unterhalb der Trenngrenze $x_{Tr}$. Bei den vorstehend angegebenen Trennergebnissen handelt es sich um idealisierte, in der Praxis nicht erreichbare Verhältnisse. Der dünn markierte Kurvenverlauf in der jeweils in Frage kommenden grafischen Darstellung soll die tatsächlich erreichbare Trennwirkung qualitativ andeuten.

In Figur 2 wird der Volumenstrom Q der Bierwürze, aus der Kühltrubpartikeln bis auf einen gewünschten Partikelgehalt entfernt werden sollen, in zwei Volumenströme $Q_1$ und $Q_2$ aufgeteilt. Der Teilstrom $Q_1$ wird, entsprechend dem Verfahrens schritt gemäß Figur 1, in einen Retentatstrom $\Delta Q_1$ und einen Permeatstrom $Q_1^*$ zerlegt. Letzterer wird anschließend mit dem unbehandelten Volumenstrom $Q_2$ vereinigt, wobei das Verhältnis $Q_1/Q_2$ in Abhängigkeit vom gewünschten Partikelgehalt regelbar ist. Die dem vereinigten Volumenstrom $Q_1^*$ + $Q_2$ zugeordnete Verteilungssum menkurve zeigt, wie sich das an sich bekannte Verfahren auf die Partikelgrößenverteilung qualitativ auswirkt.

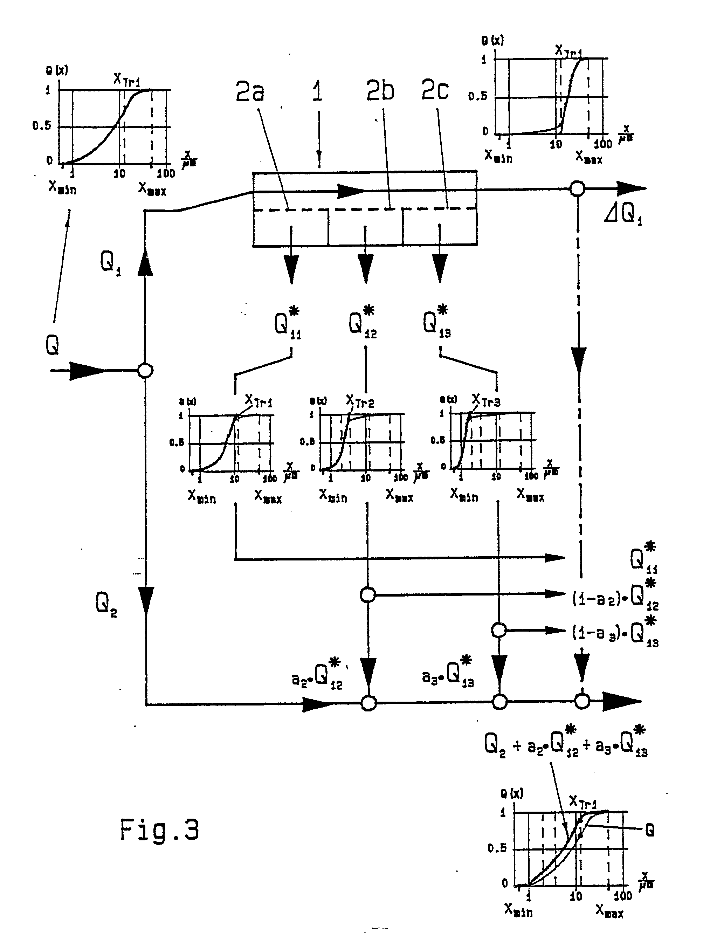

In Figur 3 sind in der Vorrichtung zur Tangentialflußfiltration 1 , in Fließrichtung gesehen, Membranen 2a, 2b, 2c mit abnehmender Trenngrenze $(x_{Tr3} < x_{Tr2} < x_{Tr1})$ vorgesehen, so daß Permeatströme $Q_{11}^*$, $Q_{12}^*$, $Q_{13}^*$ mit Kühltrubpartikeln unterschiedlicher mittlerer Größe anfallen, die getrennt voneinander erfaßt werden. In Abhängigkeit von der gewünschten Partikelgrößenverteilung werden bestimmte Permeatströme - im Ausführungsbeispiel sind dieses die Permeatströme $Q_{12}^*$ und $Q_{13}^*$ - ausgewählt und in unterschiedlichem Umfang mit dem unbehandelten Volumenstrom $Q_2$ vereinigt. Die jeweilige Trenngrenze der Membrane 2a, 2b und 2c ist mit $x_{Tr1}$ bzw. $x_{Tr2}$ bzw. $x_{Tr3}$ bezeichnet.

Die genutzten Anteile der Permeatströme $Q_{12}^*$ und $Q_{13}^*$ tragen die Bezeichnung $a_2$ bzw. $a_3$. Das qualitative Trennergebnis und seine qualitativen Auswirkungen auf die Partikelgrößenverteilung zeigt die dem vereinigten Volumenstrom $Q_2$ + $a_2 Q_{12}^*$ + $a_3 Q_{13}^*$ zugeordnete Verteilungssummenkurve.

Zusätzlich zu den ausgewählten Permeatströmen kann der Retentatstrom $\Delta Q_1$ ganz oder teilweise mit dem unbehandelten Volumenstrom $Q_2$ vereinigt werden. Dieses Verfahren ist beispielsweise dann angezeigt, wenn die größeren Partikeln, aus welchen Gründen auch immer, in der zu behandelnden Suspension anzureichern sind.

## Ansprüche

1. Verfahren zur Abscheidung von Partikeln aus vergärbaren oder vergorenen Suspensionen der Getränkeherstellung unter Anwendung der Tangentialflußfiltration (Cross-Flow-Filtration) und unter Verwendung von Membranen der Ultra-oder Mikrofiltration, wobei
- ein Volumenstrom Q der Suspension, aus der Partikeln bis auf einen gewünschten Partikelgehalt entfernt werden sollen, in zwei Volumenströme $Q_1$ und $Q_2$ aufgeteilt wird,
- ein mit Partikeln angereicherter Retentatstrom $\Delta Q_1$ aus dem Volumenstrom $Q_1$ abgeschieden wird,
- ein um den Volumenstrom $\Delta Q_1$ reduzierter Permeatstrom $Q_1^* = Q_1 \_ \Delta Q_1$ mit dem Volumenstrom $Q_2$ vereinigt wird
- und das Volumenstromverhältnis $Q_1/Q_2$ in Abhängigkeit vom gewünschten Partikelgehalt regelbar ist (Figur 2), **dadurch gekennzeichnet,**
- daß, in Fließrichtung gesehen, Membranen mit abnehmender Trenngrenze vorgesehen sind,
- daß Permeatströme $Q_{11}^*$, $Q_{12}^*$ bis $Q_{1n}^*$ mit Partikeln unterschiedlicher mittlerer Größe voneinander getrennt erfaßt und
- daß Permeatströme davon ausgewählt und mit dem Volumenstrom $Q_2$ vereinigt werden (Figur 3).

2. Verfahren nach Anspruch 1, **dadurch gekennzeichnet,** daß die Permeatströme und/oder der Retentatstrom in Abhängigkeit von der gewünschten Partikelgrößenverteilung in unterschiedlichem Umfang an der Vereinigung mit dem Volumenstrom $Q_2$ beteiligt sind bzw. ist (Figur 3).

3. Verwendung des Verfahrens nach einem der vorstehenden Ansprüche zur Abtrennung von Kühltrub aus Bierwürze.

Fig.1

Fig.2

Fig.3